# EUROPEAN PATENT APPLICATION

(11) **EP 4 002 086 A1**
(43) Date of publication of application: **25.05.2022**
(21) Application number: 20840542.3
(22) Date of filing: 09.07.2020
(51) Int. Cl.: G06F 3/147, G06F 3/14, G06T 1/20

(54) **METHOD AND DEVICE FOR IMAGE SYNTHESIS, ELECTRONIC APPARATUS AND STORAGE MEDIUM**

(30) Priority: 17.07.2019 CN 201910647137
(71) Applicant: GUANGDONG OPPO MOBILE TELECOMMUNICATIONS CORP., LTD., Dongguan, Guangdong 523860 (CN)
(72) Inventor: HU, Jie, Dongguan, Guangdong 523860 (CN); YANG, Hai, Dongguan, Guangdong 523860 (CN)
(74) Representative: Manitz Finsterwald Patent- und Rechtsanwaltspartnerschaft mbB
(86) International application number: PCT/CN2020/100970
(87) International publication number: WO 2021/008424

(57) **Abstract**

Disclosed are a method and device for image composition, an electronic apparatus and a storage medium. The method comprises: acquiring multiple image layers of an image to be displayed; determining image layer attributes of the respective image layers, the image layer attributes including a first attribute and a second attribute; using a graphics processing unit to compose the image layers having the first attribute into an image layer to be mixed; and using a multimedia display processor to compose the image layer to be mixed and the image layers having the second attribute, and displaying a composited result on a display screen. In the invention, different composition methods are selected according to image layer attributes of respective image layers, thereby enabling an electronic apparatus to exhibit favorable image layer composition performance and composition speed, and accordingly improving image processing performance of the electronic apparatus.

## Description

### CROSS-REFERENCE TO RELATED APPLICATIONS

The present disclosure claims priority of Chinese Patent Application No. 201910647137.9 filed on July 17, 2019 in the China National Intellectual Property Administration, the contents of all of which are hereby incorporated by reference.

### TECHNICAL FIELD

The present disclosure relates to the field of image display technologies, and in particular, to a method and a device for image composition, an electronic device and a storage medium.

### BACKGROUND

With development of an electronic technology, there are more and more electronic devices with image display functions (such as mobile phones or tablet computers). A display interface of an electronic device usually has a plurality of display layers. The plurality of display layers are composed and displayed on the electronic device.

Generally, when the electronic device composes layers, it is difficult to give consideration to a layer composition ability and a composition speed of the electronic device, resulting in affecting a use experience of the electronic device.

### SUMMARY

The present disclosure provides a method and a device for image composition, an electronic device and a storage medium to solve a problem that the composition ability and composition speed cannot be considered in image composition.

In a first aspect, some embodiments of the present disclosure provide an image composition method. The image composition method includes acquiring a plurality of layers of an image to be displayed; determining a layer attribute of each of the plurality of layers, and the layer attribute including a first attribute and a second attribute; composing layers with the first attribute into a layer to be mixed by a graphics processor unit (GPU); composing the layer to be mixed and layers with the second attribute by a multimedia display processor, and displaying a composition result through a display screen.In a second aspect, some embodiments of the present disclosure provide an image composition device. The image composition device includes an acquisition module configured to acquire a plurality of layers of an image to be displayed; a determination module configured to determine a layer attribute of each of the plurality of layers, and the layer attribute comprising a first attribute and a second attribute; an intermediate module configured to compose layers with first attributes into a layer to be mixed by using a graphics processor unit (GPU); a composite module configured to compose the layer to be mixed and layers with second attributes by using a multimedia display processor (MDP), and display a composition result through a display screen.

In a third aspect, some embodiments of the present disclosure provide an electronic device. The electronic device includes one or more processors, a memory electrically connected to the one or more processors, and one or more applications, wherein the one or more applications are stored in the memory and configured to be executed by the one or more processors, and the one or more applications are configured to execute the method for the electronic apparatus as described above.

In a fourth aspect, some embodiments of the present disclosure provide a computer-readable storage medium. A program code is stored in the computer-readable storage medium. The program code can be called by a processor to execute the above method.

### BRIEF DESCRIPTION OF THE DRAWINGS

In order to make the technical solution described in the embodiments of the present disclosure or prior art more clearly, the drawings used for the description of the embodiments will be briefly described. Apparently, the drawings described below are only for illustration, but not for limitation. One skilled in the art may acquire other drawings based on these drawings, without making any inventive work.
FIG. 1 shows a logic framework diagram of image processing provided by some embodiments of the present disclosure.
FIG. 2 shows a schematic view of a desktop display interface provided by some embodiments of the present disclosure.
FIG. 3 shows a schematic view of each of the plurality of layers of a desktop display interface provided by some embodiments of the present disclosure.
FIG. 4 shows a flowchart of an image composition method provided by some embodiments of the present disclosure.
FIG. 5 shows a flowchart of an image composition method provided by another embodiment of the present disclosure.
FIG. 6 shows a flowchart for determining whether a layer meets preset condition in an image composition method provided by another embodiment of the present disclosure.
FIG. 7 shows a flowchart for determining whether a layer meets preset condition in an image composition method provided by another embodiment of the present disclosure.
FIG. 8 shows a function block diagram of an image composition device provided in some embodiments of the present disclosure.
FIG. 9 shows a structural block diagram of an electronic device for performing an image composition method provided by some embodiments of the present disclosure.
FIG. 10 shows a storage medium provided by some embodiments of the present disclosure for storing or carrying program code implementing an image composition method provided by some embodiments of the present disclosure.

### DETAILED DESCRIPTION OF THE PREFERRED EMBODIMENTS

In order to make those skilled in the art better understand the scheme of the present disclosure, the technical scheme in embodiments of the present disclosure will be described more fully below with reference to the relevant drawings and embodiments. It should be understood that the described embodiments are used only to explain the present disclosure and are not used to limit the present disclosure.

An application can create windows through a window manager. The window manager creates a drawing surface for each window to draw various elements to be displayed on the drawing surface. Each drawing surface corresponds to a layer, that is, a layer can be drawn on each drawing surface.

The display interface (such as activity) can include a plurality of layers, such as a navigation bar, a status bar, a program interface, and the like. Each of the plurality of layers is rendered before composing. That is, each of the plurality of layers is drawn on a corresponding surface, that is, a corresponding layer is correspondingly drawn on each surface. Specifically, the layer can be drawn on canvas of the surface through a hardware accelerated renderer (i.e. HWUI) and/ or Skia graphics library.

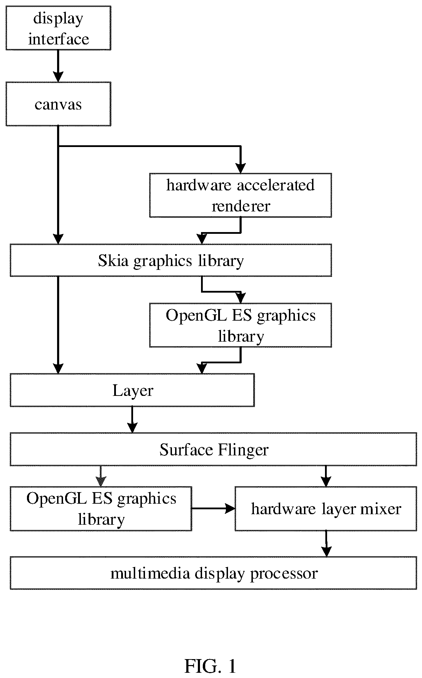

A System uses a layer transfer module (i.e. surface flinger) service to compose each surface, that is, each of the plurality of layers. The surface flinger service runs in system process and is used to uniformly manage a frame buffer of the system. The surface flinger acquires all layers, and can compose all or part of layers by using a graphics processing unit (GPU), and save composed results to the frame buffer. A multimedia display processor (MDP) can compose results composed by the surface flinger through the GPU with other layers. Specifically, as shown in FIG. 1, HWC can call the multimedia display processor (MDP) to compose the layers, and finally form a buffer in bufferqueue, and then use images composed in the buffer for display under an action of display driving. A specific composition strategy of which part of the layers are composed by the GPU and HWC can be determined based on actual situations.

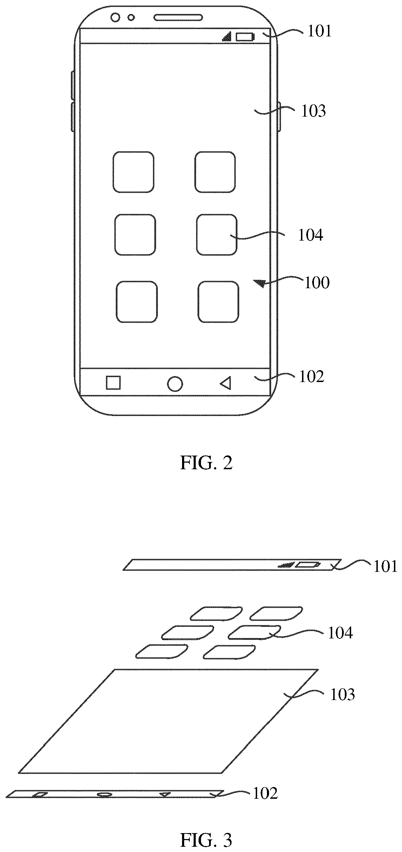

A display screen of an electronic device can display the display interface. The display interface may include a plurality of layers, that is, the display interface is composed of the plurality of layers. Each of the plurality of layers is composed of a plurality of pixels. All the plurality of layers form a whole image by superposition and form the display interface of the electronic device. The plurality of layers can accurately locate elements on a page. Text, pictures, tables and plugins can be added to the plurality of layers, or layers can be nested inside the plurality of layers. For the plurality of layers and image composed by the plurality of layers, it can be generally understood that the layer is like a film containing elements such as text or graphics. The plurality of layers are stacked together in a specified order and composed to form a final image effect, that is an image formed by composing the plurality of layers, such as the display interface of the electronic device. Of course, it is understood that the layer is not a real film. The above description is just a metaphor for ease of understanding. For example, a desktop display interface 100 of the electronic device shown in FIG. 2 includes the plurality of layers, that is, a status bar 101, a navigation bar 102, a wallpaper 103 and an icon layer 104.

In order to display the display interface on the display screen, it is necessary to compose all of the plurality of layers of the display interface. For example, the status bar 101, the navigation bar 102, the wallpaper 103 and the icon layer 104 shown in FIG. 3 are composed into the display interface 100 shown in FIG. 2. Generally, the system will use the GPU to compose image layers. A composition method can be to determine a position relationship among all the plurality of layers based on positions of all the plurality of layers in the image, render contents of all the plurality of layers to a temporary buffer with the GPU to make the position relationship among all the plurality of layers in the buffer be a position relationship in the image, and finally transfer the temporary buffer to a display hardware so that when all the plurality of layers are displayed on the display screen, a display position of each of the plurality of layers is a position of each of the plurality of layers in the image. However, when the GPU is used to process the image layers, the GPU has a strong composition ability when composing the plurality of layers, that is, there are no limitations on the number of composition layers, but a composition speed is slow, causing problems such as jamming, thus affecting a user's use experience.

Through research, inventors found that the plurality of layers can also be composed through a hardware composition mechanism of the multimedia display processor (MDP). The hardware composition mechanism of the MDP calls a MDP hardware module through HWC for composition. The composition method is fast, but the number of processed layers is limited. When the number of layers exceeds the number the MDP hardware module can handle, a task of layer composition cannot be completed, resulting in affecting display on the display screen.

In other words, if the layer composition is carried out through GPU image, although there are no limitations on the number of the processed layers compared with the MDP composition method, a speed of the layer composition carried out through the GPU image is slow, resulting in affecting fluency of the electronic device. If the layer composition is carried out through the MDP, although a speed of the layer composition carried out through the MDP is fast, the number of layers that can be processed is limited, and scenes with too many layers cannot be processed, resulting in affecting the display on the display screen.

Therefore, the inventors proposes a method and a device for image composition, an electronic device and a storage medium in the present disclosure as a composition strategy by the following operations: acquiring a plurality of layers of an image to be displayed; determining a layer attribute of each of the plurality of layers, and the layer attribute including a first attribute and a second attribute; composing a layer with a first attribute into a layer to be mixed by the graphics processing unit (GPU); composing the layer to be mixed and a layer with a second attribute by using the multimedia display processor (MDP), and displaying a composition result through the display screen. An appropriate composition method is selected based on the layer attribute of each of the plurality of layers, taking into account a layer composition ability and a composition speed of the electronic device, so as to improve the image processing ability of the electronic device.

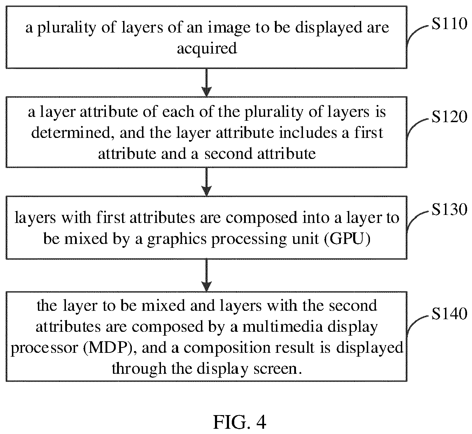

As shown in FIG. 4, some embodiments of the present disclosure provide an image composition method, and an execution subject of processing flow described in the embodiments may be an electronic device. Specifically, the method may include the following operations.

At block S110, a plurality of layers of an image to be displayed are acquired.

An existing electronic device usually has a display screen. A user usually interacts with the electronic device based on content displayed on the display screen, and define all the content displayed on the display screen as the image to be displayed. For example, if a desktop scene needs to be displayed in the display screen, the desktop scene is the image to be displayed, as shown in FIG. 2. When the desktop scene is displayed, it is essentially a result of superposition of the plurality of layers. Generally, the desktop scene can be composed of four layers. The four layers can be a status bar layer, a navigation bar layer, a wallpaper layer and an icon layer. The electronic device composes the four layers to acquire the image to be displayed, that is, the desktop scene, as shown in FIG. 3. Thus, the plurality of layers of the image to be displayed can be acquired for a next step of processing.

At block S120, a layer attribute of each of the plurality of layers is determined, and the layer attribute includes a first attribute and a second attribute.

After acquiring the plurality of layers of the image to be displayed, the layer attribute of each of the plurality of layers can be determined. If the image to be displayed has four layers, layer attributes of the four layers are determined successively. The layer attribute include the first attribute and the second attribute. A layer with the first attribute can have relatively simple data content in the layer, and time consumed by composing the layer in a same composition method is less than a preset time. A layer with the second attribute can have complex data content in the layer. Under the same composition method, time consumed by composing the layer is greater than or equal to the preset time.

At block S130, layers with the first attribute are composed into a layer to be mixed by a graphics processing unit (GPU).

In the electronic device, there are usually a variety of layer composition methods. For example, in an electronic device using an Android system, there are two methods for layer composition. One is to compose the plurality of layers for display by using the graphics processing unit (GPU), that is, a GPU composition method. The other is to use the multimedia display processor (MDP) to compose the plurality of layers for display, that is, a MDP composition method. These two composition methods have their own advantages and disadvantages. Specifically, compared with the MDP composition method, the GPU composition method has a lower processing speed, but there are no limitations on the number of processing layers. Then, compared with the GPU composition method, the MDP composition method has a faster image processing speed, but the number of the processing layers is limited. Based on these two composition methods, if only the GPU composition method is adopted, a heavy GPU image processing task will be leaded and equipment jamming and other phenomena may be caused due to the slow processing speed. If only the MDP composition method is adopted, in some multi-layer scenes, a plurality of composition is required or the layer composition cannot be completed because the number of processing layers is limited, resulting in affecting the display of the scenes.

Therefore, in processing of the plurality of layers, part of the plurality of layers can be composed by the GPU and part of the plurality of layers can be composed by the MDP. Specifically, the layers with the first attribute can be composed into the layer to be mixed by the GPU. It can be understood that if all the plurality of layers in the image to be displayed are the layers with the first attribute, the layer to be mixed composed by the GPU is a final layer to be displayed, that is, the image to be displayed. If part of the plurality of layers in the image to be displayed are layers with first attribute, the layers with the first attribute are composed into the layer to be mixed by the GPU, and then the image to be displayed can be acquired after the layer to be mixed is composed with other layers.

At block S 140, the layer to be mixed and layers with the second attribute are composed by a multimedia display processor (MDP), and a composition result is displayed through the display screen.

After the layers with the first attribute are composed into the layer to be mixed by the GPU, the layers with the second attribute and the layer to be mixed can be composed by the MDP, and the composition result can be sent to the display screen for display.

Specifically, in one embodiment, after the GPU composes the layers with the first attribute into the layer to be mixed, the layer to be mixed is sent to a frame buffer for caching. While the GPU composes the layer to be mixed, the MDP composes the layers with the second attribute into a pre-composite layer to speed up the composition speed. After composing the pre-composite layer by the MDP, the layer to be mixed is acquired from the frame buffer, the layer to be mixed and the pre-composite layer are composed into the image to be displayed by the MDP, and then the image to be displayed is sent to the display screen for display. Thus the image to be displayed can be displayed on the display screen of the electronic device.

In another embodiment, after the GPU composes the layers with the first attribute into the layer to be mixed, the layer to be mixed is sent to the frame buffer for caching, the MDP acquires the layer to be mixed from the frame buffer, and composes the layer to be mixed and the layers with the second attribute into the image to be displayed. Then, the image to be displayed is sent to the display screen for display, so that the image to be displayed can be displayed on the display screen of the electronic device.

The image composition method provided by the present disclosure is realized by the following operations. The plurality of layers of the image to be displayed are acquired. The layer attribute of each of the plurality of layers is determined, and the layer attribute includes a first attribute and a second attribute. The layers with the first attribute are composed into the layer to be mixed by the graphics processing unit (GPU). The layer to be mixed and the layers with the second attribute are composed by using the multimedia display processor (MDP). The composition result is displayed through the display screen. An appropriate composition method is selected based on the layer attribute of each of the plurality of layers, taking into account the layer composition ability and the composition speed of the electronic device, so as to improve the image processing ability of the electronic device.

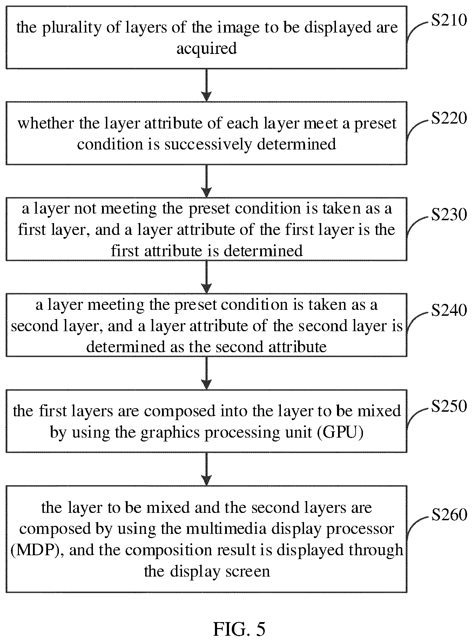

As shown in FIG. 5, other embodiments of the present disclosure provide an image composition method. Based on the previous embodiments, the embodiments focuse on process of determining the attribute of each of the plurality of layers through a preset condition. The method may include the following operations.

At block S210, the plurality of layers of the image to be displayed are acquired.

Operations at block S210 may refer to corresponding part of the above embodiments and will not be repeated here.

At block S220, whether the layer attribute of each of the plurality of layers meets a preset condition is successively determined.

When the plurality of layers of the image to be displayed are acquired, whether the layer attribute of each of the plurality of layers meets the preset condition is successively determined to determine the layer attribute of each of the plurality of layers. The layer meets the preset condition means that the layer takes more time to be composed through the GPU and a running speed of electronic device is greatly affected. The layer does not meet the preset condition means that the layer takes less time to be composed through the GPU and the running speed of electronic device is not greatly affected.

Specifically, whether the preset condition is met can determined based on image data in a layer and the preset condition is met is determined when the image data is greater than a preset data value. Whether the preset condition is met can also be determined base on whether the layer is static or dynamic. For example, in split screen display, when a static layer and a dynamic layer is included, the static layer does not meet the preset condition can be determined. If only one of two screens in a split screen includes the dynamic layer, the dynamic layer meets the preset condition can be determined. If dynamic layers are included in the two screens in the split screen, a dynamic layer with high a frame rate meets the preset condition can be determined.

At block S230, a layer of the plurality of layers not meeting the preset condition is taken as a first layer, and a layer attribute of the first layer is the first attribute is determined.

For layers not meeting the preset condition, the layers can be configured as the first layers, and the layer attribute of the first layers can be determined as the first attribute. Specifically, for example, there are four layers in the desktop scene: the status bar layer, the navigation bar layer, the wallpaper layer and the icon layer. If it is determined that the layers not meeting the preset condition are the status bar layer and wallpaper layer, the status bar layer and wallpaper layer can be configured as the first layers, and layer attribute of the status bar layer and wallpaper layer can be determined as the first attribute.

At block S240, a layer of the plurality of layers meeting the preset condition is taken as a second layer, and a layer attribute of the second layer is determined as the second attribute.

For layers meeting the preset condition, the layers can be configured as the second layers, and the layer attribute of the second layers can be determined as the second attribute. Specifically, for example, there are four layers in the desktop scene: the status bar layer, the navigation bar layer, the wallpaper layer and the icon layer. If it is determined that layers meeting the preset condition are the navigation bar layer and the icon layer, the navigation bar layer and the icon layer can be configured as second layers, and layer attribute of the navigation bar layer and the icon layer can be determined as second attribute.

At block S250, the first layers are composed into the layer to be mixed by using the graphics processing unit (GPU).

The layers with the first attribute, that is, the first layers, are composed by using the GPU. For example, if the layer attribute of the status bar layer and wallpaper layer in the desktop scene is the first attribute, images of the status bar layer and wallpaper layer are composed into the layer to be mixed using the GPU for further processing.

At block S260, the layer to be mixed and the second layers are composed by using the multimedia display processor (MDP), and the composition result is displayed through the display screen.

The second layers and the layer to be mixed composed by the GPU are composed by the MDP. For example, there are four layers in the desktop scene. The status bar layer and wallpaper layer with the first attribute have been composed into the layer to be mixed by the GPU, and remaining two layers are the navigation bar layer and icon layer with the second attribute, that is, the second layers. Thus, the layer to be mixed, the navigation bar layer and the icon layer can be composed into a final image to be displayed by the MDP, and then the final image to be displayed is sent to the display screen for display. Thus, the user can see the desktop scene on the display screen of the electronic device.

In one embodiment, after the GPU composes the status bar layer and wallpaper layer into the layer to be mixed, the layer to be mixed is sent to the frame buffer for caching, the MDP composes the navigation bar layer and the icon layer into the pre-composite layer, and acquires the layer to be mixed from the frame buffer after the MDP composes the pre-composite layer. The MDP composes the layer to be mixed and the pre-composite layer into the image to be displayed, and then sends the image to be displayed to the display screen for display.

In another embodiment, after the GPU composes the status bar layer and wallpaper layer into the layer to be mixed, the layer to be mixed is sent to the frame buffer for caching, the MDP acquires the layer to be mixed from the frame buffer, composes the layer to be mixed, the navigation bar layer and the icon layer into the image to be displayed, and sends the image to be displayed to the display screen for display.

The image composition method provided by the present disclosure is realized by the following operations. The plurality of layers of the image to be displayed are acquired. Whether the layer attribute of each of the plurality of layers meets the preset condition is successively determined. If yes, the layer of the plurality of layers is taken as the second layer and the layer attribute of the second layer is determined as the second attribute. If not, the layer of the plurality of layers is taken as the first layer, and the layer attribute of the first layer is determined as the first attribute. The layers with the first attribute are composed into the layer to be mixed by GPU, the layer to be mixed and the layers with the second attribute are composed into the image to be displayed by the MDP, and the image to be displayed is sent to the display screen for display. An appropriate composition method is selected based on the layer attribute of each of the plurality of layers, taking into account the layer composition ability and the composition speed of the electronic device, so as to improve the image processing ability of the electronic device.

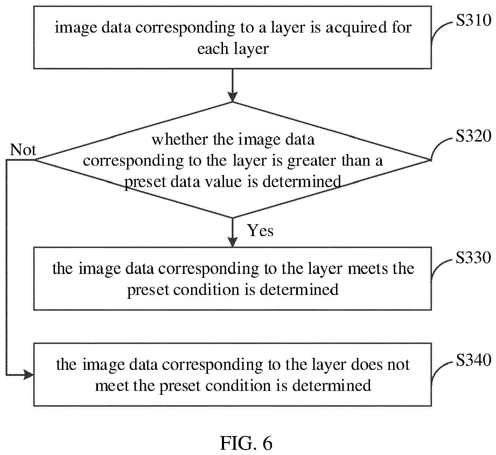

As shown in FIG. 6, other embodiments of the present disclosure provide an image composition method. Based on the above embodiments, the embodiments focuse on process of determining whether layers meet the preset condition through image data, that is, the embodiments of the present disclosure describe operations at block S220 in the above embodiments. Operations at other blocks of the image composition method can refer to other embodiments and will not be repeated here. Specifically, the method may include following operations.

At block S310, image data corresponding to a layer is acquired for each of the plurality of layers.

At block S320, whether the image data corresponding to the layer is greater than a preset data value is determined. If yes, execute operations at block S330. If not, execute operations at block S340.

Each of the plurality of layers contains a corresponding image, image data corresponding to each of the plurality of layers can be acquired. Whether image data corresponding to the layer is greater than the preset data value can be determined in response to the image data corresponding to the layer being acquired. The preset data value can be a critical value. When the image data is greater than the preset data value, it can be considered that the layer contains more content and the layer takes longer to be composed.

The image data corresponding to the layer may be an image resolution value or an image size. Resolution represents the number of pixels per inch of the image. A unit is PPI (pixels per inch) and can represent the amount of data contained in the image. In a condition that the image size is certain, the higher the resolution, the clearer the image and the more data content the image contains. The image size represents the amount of image data, that is, the number of bytes, bits or storage space occupied by the image. The larger the image size, the larger the storage space occupied by the image.

The image data can be acquired by capturing an image in each of the plurality of layers, and the image resolution value or the image size can be acquired by analyzing the image. If acquired image data is the image resolution value, the preset data value is a preset resolution value. Determining whether the image data corresponding to the layer is greater than the preset data value can be comparing the image resolution value and the preset resolution value. If the acquired image data is the image size, the preset data value is a preset size value. Determining whether the image data corresponding to the layer is greater than the preset data value can be determining the image size and the preset size value. The image data corresponding to the layer can be determined through experiments in advance based on performance of the GPU and the MDP, regardless of what parameters are defined. A size relationship between the image size corresponding to the layer and the preset size value can also be determined. Whether the image data corresponding to the layer meets the preset condition can be determined through the size relationship.

It can be understood that the parameters configured to represent the image data are not limited to the image resolution value and the image size, but can also include an image frame rate and an image depth value. The higher the image frame rate value, the faster the composition speed is required. If the image frame rate value is greater than a preset frame rate value of the image frame rate value, a faster layer composition method is required to compose the layer. Thus, whether the image data of the layer meets the preset condition can be determined based on whether the image frame rate is greater than the preset data value. The preset data value corresponding to the image frame rate can be a preset frame rate value. Whether the image data corresponding to the layer is greater than the preset data value can be determined by comparing whether the image frame rate in the layer is greater than the preset frame rate value. The image data corresponding to the layer is greater than the preset data value is determined in response to the image frame rate in the layer being greater than the preset frame rate value. The image data corresponding to the layer is not greater than the preset data value is determined in response to the image frame rate in the layer not being greater than the preset frame rate value.

The image depth value is greater than a preset depth value indicates that there are more content in the image, and the layer of the image takes a long time to be composed. Thus the faster layer composition method is required to compose the layer. Therefore, whether the image data of the layer meets the preset condition can be determined based on whether the image depth value is greater than the preset data value. That is, the preset data value corresponding to the image depth value can be the preset depth value, whether the image data corresponding to the layer is greater than the preset data value can be determined by comparing whether the image depth value in the layer is greater than the preset depth value. The image data corresponding to the layer is greater than the preset data value is determined in response to the image depth value in the layer being greater than the preset depth value. The image data corresponding to the layer is not greater than the preset data value is determined in response to the image depth value in the layer not being greater than the preset depth value.

If the image data corresponding to the layer is greater than the preset data value is determined, execute operations at block S330. If the image data corresponding to the layer is not greater than the preset data value is determined, execute operations at block S340. Only the image resolution value and image size in the image attribute are described in detail below.

At block S330, the image data corresponding to the layer meets the preset condition is determined.

The image data corresponding to the layer is greater than the preset data value indicates that the layer composition is more time-consuming and requires a faster composition speed and the image data corresponding to the layer meets the preset condition can be determined for composition by the multimedia display processor.

For example, the image data corresponding to an acquired layer is the image resolution value. The image data corresponding to the layer meets the preset condition is determined in response to the image resolution value being greater than the preset resolution value. The layer can be configured as the second layer, and the layer attribute of the second layer is determined as the second attribute, indicating that the second layer contains more data. It takes a long time to compose the second layer. It is necessary to select a method with the faster composition speed to compose the second layer.

As another example, the image data corresponding to the acquired layer is the image size. The image data corresponding to the layer meets the preset condition is determined in response to the image size being greater than the preset size value, the layer can be configured as the second layer, and the layer attribute of the second layer can be further determined as the second attribute, indicating that the second layer contains more data content. It takes a long time to compose the second layer. It is necessary to select the method with the faster composition speed to compose the second layer.

At block S340, the image data corresponding to the layer does not meet the preset condition is determined.

The image data corresponding to the layer does not meet the preset condition can be determined in response to the image data corresponding to the layer being less than the preset data value.

For example, the image data corresponding to the acquired layer is the image resolution value. The image data corresponding to the layer does not meet the preset condition is determined in response to the image resolution value being less than or equal to the preset resolution value, the layer can be taken as the first layer, and the layer attribute of the first layer can be determined as the first attribute, indicating that the first layer contains less data, and it will not take a long time to compose the first layer. A method with a better composition ability to compose the first layer is selected.

As another example, the image data corresponding to the acquired layer is the image size. The image data corresponding to the layer does not meet the preset condition is determined in response to the image size being less than or equal to the preset size value, the layer can be configured as the first layer, and the layer attribute of the first layer can be determined as the first attribute, indicating that the first layer contains less data content. It will not take a long time to compose the first layer. The method with the better composition ability to compose the first layer is selected.

The image composition method provided by the present disclosure is realized by the following operations. Whether the image data corresponding to the layer is greater than the preset data value is determined by acquiring the image data corresponding to each of the plurality of layers. The image data corresponding to the layer meets the preset condition is determined in response to the image data corresponding to the layer being greater than the preset data value. The image data corresponding to the layer does not meet the preset condition is determined in response to the image data corresponding to the layer not being greater than the preset data value. Whether the layer meets the preset condition based on the image data is determined, then the layer attribute corresponding to each of the plurality of layers is determined to process the layer by selecting an appropriate layer composition method, taking into account the layer composition ability and the composition speed of the electronic device, so as to improve the image processing ability of the electronic device.

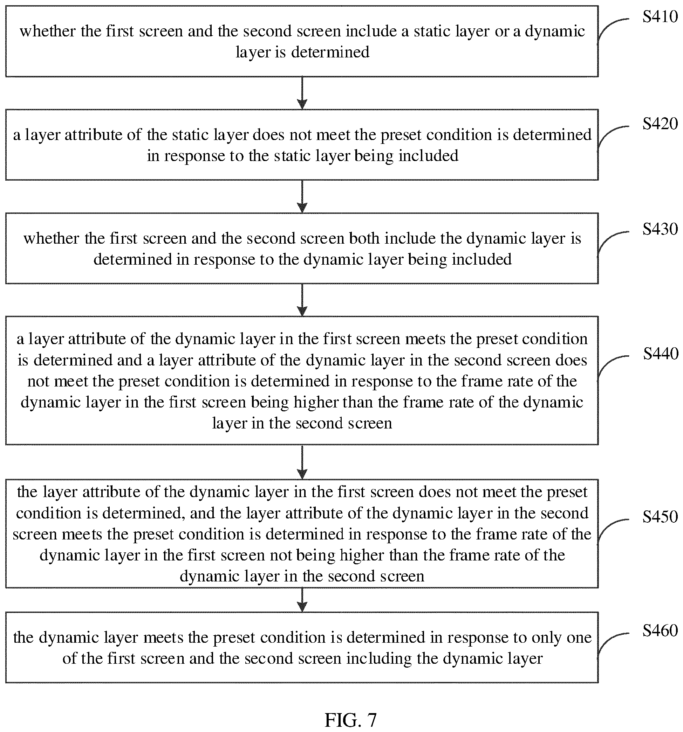

As shown in FIG. 7, other embodiments of the present disclosure provide an image composition method. Based on the above embodiments, the embodiments focuse on process of determining whether the layer attribute of each of the plurality of layers meets the preset condition through the static layer or the dynamic layer in a split screen display state of the electronic device, that is, operations at block S220 in the above embodiments. Operations at other blocks of the image composition method can refer to other embodiments and will not be repeated here. Specifically, the method may include following operations.

At block S410, whether the first screen and the second screen include a static layer or a dynamic layer is determined.

The electronic device usually has a split screen display function, that is, there are two screens in one display screen of the electronic device display different content respectively, and content characteristics of the two screens may be completely different. For example, content displayed on one screen is static content and content displayed on the other screen is dynamic content. Therefore, layers can be composed in the two screens respectively based on the display characteristics of each screen. For example, the display screen of the electronic device is divided into upper and lower screens taking a middle of the display screen as a boundary. A wechat chat interface is displayed on the upper screen, and a video is played on the lower screen. The two screens of the electronic device in the split screen display state can be configured as the first screen and the second screen respectively. During layer composition, the electronic device composes layers in the first screen and layers in the second screen for display. Then, during split screen display, the content displayed on the first screen and the second screen of the electronic device can be static content such as photos or dynamic content such as video. Then, whether the first screen and the second screen include the static layer or the dynamic layer can be determined.

Specifically, whether the layer is the static layer or the dynamic layer can be determined based on the frame rate of the layer. A preset frame rate can be set to compare the frame rate of the layer in the first screen and the second screen with the preset frame rate. If the frame rate of the layer is greater than the preset frame rate, the layer is the dynamic layer is determined. If the frame rate of the layer is less than or equal to the preset frame rate, the layer is the static layer is determined.

At block S420, a layer attribute of the static layer does not meet the preset condition is determined in response to the static layer being included.

If the first screen and the second screen include the static layer, it will not take a long time to compose the static layer because the content of the static layer will not change in a short time, and all static layers can be composed by the GPU. Thus, the static layer does not meet the preset condition is determined. The static layer in the first screen and the second screen can be configured as the first layer, and a layer attribute of the static layer in the first screen and the second screen can be determined as the first attribute.

At block S430, whether the first screen and the second screen both include the dynamic layer is determined in response to the dynamic layer being included.

If the first screen and the second screen include the dynamic layer, and dynamic layers are in both screens, all dynamic layers are composed through the MDP, resulting in exceeding the composition ability of the MDP. It is necessary to select a dynamic layer of one screen to be composed by the MDP. If only one screen includes the dynamic layer, the dynamic layer can be composed by the MDP.

Specifically, whether the first screen and the second screen both include the dynamic layer can be further determined. In one embodiment, the dynamic layer can be first acquired, and then a source file corresponding to the dynamic layer can be acquired. Whether the dynamic layer comes from the first screen or the second screen is determined based on the source file. Only one of the first screen and the second screen includes the dynamic layer is determined in response to the dynamic layer only coming from the first screen. One of the first screen and the second screen including the dynamic layer is determined in response to the dynamic layer only coming from the second screen. The dynamic layers are included in both the first screen and the second screen both include the dynamic layer is determined in response to the dynamic layer coming from both the first screen and the second screen.

In other embodiments, when the dynamic layer is included is determined, a plurality of layers in the first screen can be first acquired, a plurality of frame rates of the plurality of layers in one-to-one correspondence can be acquired, and the plurality of frame rates in the first screen are compared with the preset frame rate. If none of the plurality of frame rates in the first screen is greater than the preset frame rate, the dynamic layer is not included in the first screen, and only one of the first screen and the second screen includes the dynamic layer is determined. If at least one of the plurality of frame rates is greater than the preset frame rate, a plurality of frame rates of the plurality of layers in the second screen in one-to-one correspondence are continued to be acquired, and the plurality of frame rates in the second screen are compared with the preset frame rate. If none of the plurality of frame rates in the second screen is greater than the preset frame rate, the dynamic layer is not included in the second screen. Then only one of the first screen and the second screen includes the dynamic layer is determined. If at least one of the plurality of frame rates in the second screen is greater than the preset frame rate, the first screen and the second screen both include the dynamic layer is determined. In the embodiments, if there is only one layer in one screen, the plurality of layers of the screen are one layer. In determining whether a dynamic layer is included in the screen is determined, a frame rate of the one layer in the screen is compared with the preset frame rate to determine whether the layer included in the screen is the dynamic layer. The one layer is the dynamic layer can be determined in response to the frame rate of the one layer being greater than the preset frame rate. The one layer is the static layer can be determined in response to the frame rate of the one layer being not greater than the preset frame rate.

At block S440, a layer attribute of the dynamic layer in the first screen meets the preset condition is determined and a layer attribute of the dynamic layer in the second screen does not meet the preset condition is determined in response to a frame rate of the dynamic layer in the first screen being higher than a frame rate of the dynamic layer in the second screen.

The frame rate corresponding to the dynamic layer can be acquired to determine whether the dynamic layer meets the preset condition in response to the first screen and the second screen both including dynamic layer is determined. Specifically, the frame rate of the dynamic layer in the first screen and the frame rate of the dynamic layer in the second screen can be acquired. Composition of the dynamic layer in the first screen takes more time in response to the frame rate of the dynamic layer in the first screen being greater than the frame rate of the dynamic layer in the second screen. Then, the layer attribute of the dynamic layer in the first screen meets the preset condition can be determined, and the layer attribute of the dynamic layer in the second screen does not meet the preset condition can be determined.

For example, if the frame rate of the dynamic layer acquired in first screen is 30fps and the frame rate of the dynamic layer acquired in the second screen is 24fps, then the frame rate of the dynamic layer in the first screen is greater than the frame rate of the dynamic layer in the second screen, that is, 30fps > 24fps, then the layer attribute of the dynamic layer in the first screen meets the preset condition is determined and the layer attribute of the dynamic layer in the second screen does not meet the preset condition is determined, indicating that a content refresh speed in the first screen is fast, and a faster composition method is needed to compose the layer. If a content refresh speed in the second screen is slow, a composition method with the better composition ability can be selected to compose the layer.

Alternatively, when the frame rate of the dynamic layer in the first screen and the dynamic layer in the second screen is determined, an average frame rate of dynamic layers in the screen can be configured as the frame rate of the dynamic layer in the screen in response to there being more than one dynamic layer in the screen. Before whether the frame rate of the dynamic layer in the first screen is higher than the frame rate of the dynamic layer in the second screen is determined, the average frame rate of the dynamic layers in the screen can be calculated as the frame rate of the dynamic layer in the screen in response to there being the more than one dynamic layer in the screenscreen.

At block S450, the layer attribute of the dynamic layer in the first screen does not meet the preset condition is determined, and the layer attribute of the dynamic layer in the second screen meets the preset condition is determined in response to the frame rate of the dynamic layer in the first screen not being higher than the frame rate of the dynamic layer in the second screen.

A frame rate corresponding to each dynamic layer can be acquired to determine whether the dynamic layer meets the preset condition in response to the first screen and the second screen both including the dynamic layer is determined. Specifically, frame rates of all dynamic layers in the first screen and frame rates of all dynamic layers in the second screen can be acquired. The composition of dynamic layers in the second screen may take more time in response to the frame rates of all dynamic layers in the first screen being less than or equal to the frame rates of all dynamic layers in the second screen. Then, the layer attribute of the dynamic layers in the first screen does not meet the preset condition is determined, and the layer attribute of the dynamic layers in the second screen meets the preset condition is determined.

For example, the frame rate of the dynamic layer in the first screen is 26 FPS and the frame rate of the dynamic layer in the second screen is 29 FPS, then the frame rate of the dynamic layer in the first screen is less than the frame rate of the dynamic layer in the second screen, that is, 26 FPS < 29 FPS, then the layer attribute of the dynamic layer in the first screen does not meet the preset condition is determined. The layer attribute of the dynamic layer of the second screen meets the preset condition is determined, indicating that the content refresh speed in the first screen is slow, the composition method with the better composition ability can be selected to compose the layer, and the content refresh speed in the second screen is fast, so the faster composition method is needed to compose the layer.

At block S460, the dynamic layer meets the preset condition is determined in response to only one of the first screen and the second screen including the dynamic layer.

The dynamic layer meets the preset condition can be directly determined in response to only one of the first screen and the second screen including the dynamic layer. Layer composition pressure of the electronic device is small in response to only one screen including the dynamic layer, but because the dynamic layer needs to constantly update the display content, the composition method with the faster composition speed can be selected to compose the dynamic layer.

It can be understood that only operations at block S460 are performed and operations at blocks S440 and S450 are not performed in response to only one of the first screen and the second screen includes the dynamic layer being determined at block S430. Operations at block S440 or at block S450 are selected based on the frame rate, and operations at block S460 are not performed in response to the first screen and the second screen both include dynamic the layer being determined at block S430.

The image composition method provided by the present disclosure is realized by the following operations. Whether the first screen and the second screen include the static layer or the dynamic layer is determined in the electronic device with split screen display. The layer attribute of the static layer does not meet the preset condition is determined in response to the static layer being included. Whether the first screen and the second screen both include the dynamic layer is determined in response to the dynamic layer being included. Whether the preset condition is met based on the frame rate of the dynamic layer is determined in response to the first screen and the second screen both including the dynamic layer, then the layer attribute corresponding to each of the plurality of layers is determined, an appropriate layer composition method to process the layer is selected, taking into account the layer composition ability and the composition speed of the electronic device, to improve the image processing capability of the electronic device.

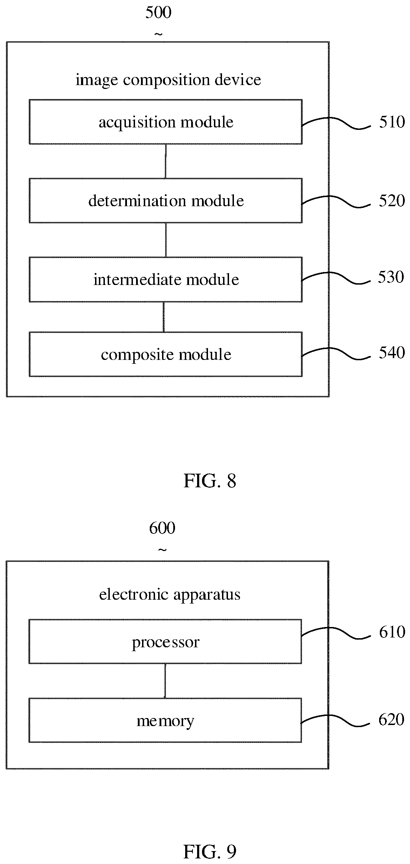

As shown in FIG. 8, FIG. 8 shows an image composition device 500 provided by some embodiments of the present disclosure. The device 500 includes an acquisition module 510, a determination module 520, an intermediate module 530 and a composite module 540.

The acquisition module 510 is configured to acquire a plurality of layers of an image to be displayed. The determination module 520 is configured to determine a layer attribute of each of the plurality of layers. The layer attribute includes a first attribute and a second attribute. The intermediate module 530 is configured to compose layers with the first attribute into a layer to be mixed by using a graphics processing unit (GPU). The composite module 540 is configured to compose the layer to be mixed with layers with second attribute by using a multimedia display processor (MDP), and display a composition result through a display screen.

Furthermore, the determination module 520 is also configured to successively determine whether a layer attribute of each of the plurality of layers meets a preset condition, take a layer of the plurality of layers not meeting a preset condition as a first layer, and determine a layer attribute of the first layer as the first attribute, take a layer of the plurality of layers meeting the preset condition as a second layer, and determine a layer attribute of the second layer as the second attribute.

Moreover, the determination module 520 is also configured to acquire image data corresponding to each of the plurality of layers, determine whether image data corresponding to a layer is greater than a preset data value, determine that the image data corresponding to the layer meets the preset condition in response to the image data corresponding to the layer being greater than the preset data value, and determine that the image data corresponding to the layer does not meet the preset condition in response to the image data corresponding to the layer not being greater than the preset data value.

Besides, the determination module 520 is also configured to compare whether an image resolution value corresponding to the layer is greater than the preset resolution value, and determine that the image data corresponding to the layer is greater than the preset data value in response to the image resolution value corresponding to the layer being greater than the preset resolution value.

In addition, the determination module 520 is also configured to compare whether an image size corresponding to the layer is greater than a preset size value, and determine that the image data corresponding to the layer is greater than the preset data value in response to the image size corresponding to the layer being greater than the preset size value.

In addition, the determination module 520 is also configured to determine whether the first screen and the second screen include a static layer or a dynamic layer, determine that a layer attribute of the static layer does not meet the preset condition in response to the static layer being included, determine whether the first screen and the second screen both include the dynamic layer in response to the dynamic layer being included, determine whether a frame rate of the dynamic layer in the first screen is higher than a frame rate of the dynamic layer in the second screen in response to the first screen and the second screen both including the dynamic layer, determine that the layer attribute of the dynamic layer in the first screen meets the preset condition, and determine that the layer attribute of the dynamic layer in the second screen does not meet the preset condition in response to the frame rate of the dynamic layer in the first screen being higher than the frame rate of the dynamic layer in the second screen, determine that the layer attribute of the dynamic layer in the first screen does not meet the preset condition, and determine that the layer attribute of the dynamic layer in the second screen meets the preset condition in response to the frame rate of the dynamic layer in the first screen not being higher than the frame rate of the dynamic layers in the second screen, and determine that the dynamic layer meets the preset condition in response to only one of the first screen and the second screen including the dynamic layers.

In addition, the intermediate module 530 is also configured to send the composed layer to be mixed to the frame buffer for caching, and the composite module is also configured to compose the layers with the second attribute into a pre-composite layer by using the multimedia display processor, acquire the layer to be mixed from the frame buffer, and then compose the layer to be mixed and the pre-composite layer into the image to be displayed by using the multimedia display processor, and send the image to be displayed to the display screen for display.

It should be noted that those skilled in the art can clearly understand that for the convenience and simplicity of description, the specific working process of the above described device and modules can refer to the corresponding process in the above method embodiments, which will not be repeated here.

In summary, the image composition method provided by the present disclosure is realized by the following operations. The plurality of layers of the image to be displayed are acquired. The layer attribute of each of the plurality of layers is determined, and the layer attribute includes the first attribute and the second attribute. The layers with the first attribute are composed into the layer to be mixed by the graphics processing unit (GPU). The layer to be mixed and the layers with the second attribute are composed by using the multimedia display processor (MDP), and the composition result is displayed through the display screen. An appropriate composition method is selected based on the layer attribute of each of the plurality of layers, taking into account the layer composition ability and the composition speed of electronic device, so as to improve the image processing ability of electronic device.

In several embodiments provided by the present disclosure, coupling or direct coupling or communication connection between the modules shown or discussed may be indirect coupling or communication connection through some interfaces, devices or modules, and may be electrical, mechanical or other forms.

In addition, all functional modules in each embodiment of the present disclosure can be integrated into one processing module, each module can exist separately, or two or more modules can be integrated into one module. The above integrated module can be realized in the form of hardware or software function modules.

As shown in FIG. 9, FIG. 9 shows a structural block diagram of an electronic device provided by some embodiments of the present disclosure. The electronic device 600 may be an electronic device capable of running an application such as a smartphone, a tablet computer, an e-book, etc. The electronic device 600 in the present disclosure may include one or more following components: a processor 610, a memory 620, and one or more application. The one or more applications may be stored in the memory 620 and configured to be executed by the one or more processors 610, and one or more applications are configured to execute the method described in the above method embodiments.

The processor 610 may include one or more processing cores. The processor 610 connects various parts of the electronic device 600 by using various interfaces and lines, executes various functions and processes data of the electronic device 600 by running or executing instructions, programs, code sets or instruction sets stored in the memory 620, and calling data stored in the memory 620. Alternatively, the processor 610 may be implemented in at least one hardware form of digital signal processing (DSP), field programmable gate array (FPGA) and programmable logic array (PLA). The processor 610 may integrate one or more combinations of a central processing unit (CPU), a graphics processing unit (GPU), a modem, etc. The CPU mainly deals with an operating system, a user interface, applications, and the like. The GPU is configured to render and draw the displayed content. The modem is configured to handle wireless communications. It can be understood that the above modem may not be integrated into the processor 610 and may be implemented separately through a communication chip.

The memory 620 may include a random access memory (RAM) or a read only memory. The memory 620 may be configured to store instructions, programs, codes, code sets, or instruction sets. The memory 620 may include a storage program area and a storage data area. The storage program area may store instructions for realizing the operating system, instructions for realizing at least one function (such as touch function, sound playback function, image playback function, etc.), instructions for realizing the following method embodiments, and the like. The storage data area can also store data (such as phonebook, audio and video data, chat record data) created by the electronic device 600 in use.

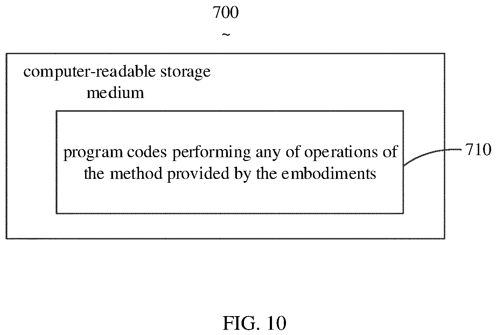

As shown in FIG. 10, FIG. 10 shows a structural block diagram of a computer-readable storage medium provided by some embodiments of the present disclosure. The computer-readable storage medium 700 stores program code that can be called by the processor to execute the method described in the above method embodiments.

The computer-readable storage medium 700 may be an electronic memory such as a flash memory, an electrically erasable programmable read only memory (EEPROM), an EPROM, a hard disk, or a ROM. Alternatively, the computer-readable storage medium 700 includes a non transitory computer-readable storage medium. The computer-readable storage medium 700 has a storage space for program codes 710 that perform any of method operations described above. These program codes can be read from or written into one or more computer program products. The program code 710 may be compressed, for example, in an appropriate form.

Finally, it should be noted that the above embodiments are only used to illustrate the technical scheme of the present disclosure, not to limit the technical scheme of the present disclosure. Although the present disclosure has been described in detail with reference to the above embodiments, those skilled in the art should understand that they can still modify the technical solutions recorded in the above embodiments or replace some of the technical features equally. These modifications or substitutions do not drive essence of corresponding technical solutions away from the spirit and scope of the technical solutions of the embodiments of the present disclosure.

## Claims

1. An image composition method, comprising:
acquiring a plurality of layers of an image to be displayed;
determining a layer attribute of each of the plurality of layers, and the layer attribute comprising a first attribute and a second attribute;
composing layers with the first attribute into a layer to be mixed by a graphics processor unit;
composing the layer to be mixed and layers with the second attribute by a multimedia display processor, and displaying a composition result through a display screen.

2. The method as claimed in claim 1, wherein the determining a layer attribute of each of the plurality of layers, comprises:
successively determining whether the layer attribute of each of the plurality of layers meets a preset condition;
taking a layer of the plurality of layers not meeting the preset condition as a first layer, and determining a layer attribute of the first layer as the first attribute;
taking a layer of the plurality of layers meeting the preset condition as a second layer, and determining a layer attribute of the second layer as the second attribute.

3. The method as claimed in claim 2, wherein the successively determining whether the layer attribute of each of the plurality of layers meets a preset condition, comprises:
acquiring image data corresponding to a layer for each of the plurality of layers;
determining whether the image data corresponding to the layer is greater than a preset data value;
determining that the image data corresponding to the layer meets the preset condition in response to the image data corresponding to the layer being greater than the preset data value;
determining that the image data corresponding to the layer does not meet the preset condition in response to the image data corresponding to the layer not being greater than the preset data value.

4. The method as claimed in claim 3, wherein the determining whether the image data corresponding to the layer is greater than a preset data value, comprises:
comparing whether an image resolution value corresponding to the layer is greater than a preset resolution value;
determining that the image data corresponding to the layer is greater than the preset data value in response to the image resolution value corresponding to the layer being greater than the preset resolution value.

5. The method as claimed in claim 3, wherein the determining whether the image data corresponding to the layer is greater than a preset data value, comprises:
comparing whether an image size corresponding to the layer is greater than a preset size value;
determining that the image data corresponding to the layer is greater than the preset data value in response to the image size corresponding to the layer being greater than the preset size value.

6. The method as claimed in claim 5, wherein the image size represents the number of bits or storage space occupied by an image, and the larger the image size, the larger the storage space occupied by the image.

7. The method as claimed in claim 3, wherein the determining whether the image data corresponding to the layer is greater than a preset data value, comprises:
comparing whether an image frame rate of the layer is greater than a preset frame rate value;
determining that the image data corresponding to the layer is greater than the preset data value in response to the image frame rate of the layer being greater than the preset frame rate value.

8. The method as claimed in claim 3, wherein the determining whether the image data corresponding to the layer is greater than a preset data value, comprises:
comparing whether an image depth value in the layer is greater than a preset depth value;
determining that the image data corresponding to the layer is greater than the preset data value in response to the image depth value in the layer being greater than the preset depth value.

9. The method as claimed in claim 2, wherein two display screens in a split screen display state are taken as a first screen and a second screen respectively while an electronic device is in the split screen display state, and the successively determining whether the layer attribute of each of the plurality of layers meets a preset condition, comprises:
determining whether the first screen and the second screen comprise a static layer or a dynamic layer;
determining that a layer attribute of the static layer does not meet the preset condition in response to the static layer being comprised;
determining whether the first screen and the second screen both comprise the dynamic layer in response to the dynamic layer being comprised;
determining whether a frame rate of a dynamic layer in the first screen is higher than a frame rate of a dynamic layer in the second screen in response to the first screen and the second screen both comprising the dynamic layer;
determining that a layer attribute of the dynamic layer in the first screen meets the preset condition, and determining that a layer attribute of the dynamic layer in the second screen does not meet the preset condition in response to a frame rate of the dynamic layer in the first screen being higher than a frame rate of the dynamic layer in the second screen;
determining that the layer attribute of the dynamic layer in the first screen does not meet the preset condition, and determining that the layer attribute of the dynamic layer in the second screen meets the preset condition in response to the frame rate of the dynamic layer in the first screen not being higher than the frame rate of the dynamic layer in the second screen;
determining that the dynamic layer meets the preset condition in response to only one of the first screen and the second screen comprising the dynamic layer.

10. The method as claimed in claim 9, wherein the determining whether the first screen and the second screen comprise a static layer or a dynamic layer, comprises:
comparing a frame rate of a layer in the first screen and the second screen with the preset frame rate;
determining that the layer is the dynamic layer in response to the frame rate of the layer being greater than the preset frame rate;
determining that the layer is the static layer in response to the frame rate of the layer being less than or equal to the preset frame rate.

11. The method as claimed in claim 9 or claim 10, wherein before the determining whether a frame rate of a dynamic layer in the first screen is higher than a frame rate of a dynamic layer in the second screen, the method comprises:
calculating an average frame rate of more than one dynamic layers in the screen as the frame rate of the more than one dynamic layers in the screen in response to there being more than one dynamic layers in a screen.

12. The method as claimed in any one of claims 9 to 11, wherein the determining whether the first screen and the second screen both comprise the dynamic layer, comprises:
acquiring a source file corresponding to the dynamic layer;
determining whether the dynamic layer comes from the first screen or the second screen based on the source file;
determining that only one of the first screen and the second screen comprises the dynamic layer in responses to determining that the dynamic layer only coming from the first screen or only coming from the second screen;
determining that the first screen and the second screen both comprise the dynamic layer in response to the dynamic layer coming from both the first screen and the second screen.

13. The method as claimed in any one of claims 9 to 12, wherein the determining whether the first screen and the second screen both comprise the dynamic layer, comprises:
acquiring a plurality of frame rates of a plurality of layers in the first screen in one-to-one correspondence;
comparing the plurality of frame rates in the first screen with a preset frame rate;
determining that only one of the first screen and the second screen comprises the dynamic layer in response to the plurality of frame rates in the first screen not being greater than the preset frame rate;
acquiring a plurality of frame rates of a plurality of layers in the second screen in one-to-one correspondence in response to at least one of the plurality of frame rates in the first screen being greater than the preset frame rate;
comparing the plurality of frame rates in the second screen with the preset frame rate;
determining that only one of the first screen and the second screen comprises the dynamic layer in response to none of the plurality of frame rates in the second screen being greater than the preset frame rate;
determining that the first screen and the second screen both comprise the dynamic layer in response to at least one of the plurality of frame rates being greater than the preset frame rate.

14. The method as claimed in any one of claims 1 to 13, further comprising:
sending a composed layer to be mixed to a frame buffer for caching;
wherein the composing the layer to be mixed and layers with the second attribute by the multimedia display processor, and displaying a composition result through a display screen, comprises:
composing the layers with the second attribute into a pre-composite layer by using the multimedia display processor;
acquiring the layer to be mixed from the frame buffer, and composing the layer to be mixed and the pre-composite layer into the image to be displayed by using the multimedia display processor;
sending the image to be displayed to the display screen for display.

15. The method as claimed in any one of claims 1 to 13, further comprising:
sending a composed layer to be mixed to the frame buffer for caching;
wherein the composing the layer to be mixed and layers with the second attribute by a multimedia display processor, and displaying a composition result through a display screen, comprises:
acquiring the layer to be mixed from the frame buffer;
composing the layer to be mixed together with the layers with the second attribute into the image to be displayed;
sending the image to be displayed to the display screen for display.

16. The method as claimed in any one of claims 1 to 15, wherein under a same composition method, time consumed by composing the layers with the first attribute is less than a preset time, and time consumed by composing the layers with the second attribute is greater than or equal to the preset time.

17. The method as claimed in any one of claims 1 to 16, wherein before acquiring a plurality of layers of an image to be displayed, the method further comprises: rendering the plurality of layers.

18. An image composition device, comprising:
an acquisition module configured to acquire a plurality of layers of an image to be displayed;
a determination module configured to determine a layer attribute of each of the plurality of layers, and the layer attribute comprising a first attribute and a second attribute;
an intermediate module configured to compose layers with first attributes into a layer to be mixed by using a graphics processor unit; and
a composite module configured to compose the layer to be mixed and layers with second attributes by using a multimedia display processor, and display a composition result through a display screen.

19. An electronic device, comprising:
one or more processors;
a memory electrically connected to the one or more processors; and
one or more applications, wherein the one or more applications are stored in the memory and configured to be executed by the one or more processors, and the one or more applications are configured to execute the method as claimed in any one of claims 1 to 17.

20. A computer-readable storage medium, wherein a program code is stored in the computer-readable storage medium, and the program code is configured to be called by a processor to execute the method as claimed in any one of claims 1 to 17.
